# FASCICULE DE BREVET EUROPEEN

(11) **EP 2 203 636 B1**
(45) Date de publication et mention de la délivrance du brevet: **08.01.2020**
(21) Numéro de dépôt: 08869131.6
(22) Date de dépôt: 09.10.2008
(51) Int. Cl.: F02D 35/02, F02D 37/02, F02D 41/00, F02M 26/06

(54) **PROCÉDÉ DE CONTRÔLE D'UN MOTEUR À ESSENCE À CIRCUIT EGR BASSE PRESSION**
STEUERUNGSVERFAHREN FÜR EINE BENZINBRENNKRAFTMASCHINE MIT AGR-NIEDERDRUCKKREISLAUF
CONTROL METHOD FOR A PETROL ENGINE HAVING A LOW-PRESSURE EGR CIRCUIT

(30) Priorité: 10.10.2007 FR 0707095
(43) Date de publication de la demande: 07.07.2010
(73) Titulaire: Valeo Systèmes de Contrôle Moteur, 95892 Cergy Pontoise Cedex (FR)
(72) Inventeur: LUTZ, Philippe, F-78100 Le Vesinet (FR); POTTEAU, Sébastien, F-78510 Triel sur Seine (FR); ALBERT, Laurent, 60640 VERDERIE (FR)
(74) Mandataire: Ipside
(86) Numéro de dépôt international: PCT/FR2008/001411
(87) Numéro de publication internationale: WO 2009/083665

(56) Documents cités:
- EP-A- 1 637 715
- EP-A2- 0 074 885
- EP-A2- 0 489 263
- EP-A2- 1 484 491
- WO-A-2007/012778
- DE-C1- 19 523 106
- FR-A- 2 892 154
- JP-A- S5 825 559
- JP-A- 2006 257 940
- JP-A- 2007 046 466
- US-A1- 2004 088 102
- US-A1- 2006 243 241
- US-B1- 6 354 264

## Description

La présente invention concerne un moteur thermique utilisable notamment pour mouvoir un véhicule automobile et un procédé de gestion d'un tel moteur. L'invention concerne plus particulièrement les moteurs turbocompressés utilisant comme carburant l'essence.

### ARRIERE PLAN DE L'INVENTION

Un tel moteur comprend généralement un bloc moteur qui délimite des chambres de combustion reliées à un circuit d'admission comportant un compresseur et un circuit d'échappement comportant une turbine d'entraînement du compresseur. Le bloc moteur est associé à un dispositif d'introduction d'essence dans les chambres de combustion, généralement des injecteurs, et à un dispositif d'allumage pour initier, dans chaque chambre de combustion, la combustion du mélange formé par l'air issu du circuit d'admission et par l'essence issue des injecteurs. Lorsque le moteur est en pleine charge, par exemple en phase d'accélération, il arrive que la combustion du mélange air - essence ne soit pas parfaite, la compression du mélange engendrant, dans la chambre de combustion, des ondes de chocs (combustion détonante ou cliquetis) risquant de détériorer le moteur.

Pour résoudre ce problème, il est connu des brevets US 2004/088102, EP 1 484 491, JP 2007-46466A et JP S58 25559 d'enrichir le mélange en augmentant la quantité d'essence mélangée à l'air d'admission et/ou de retarder l'allumage, et éventuellement en plus de ces corrections d'introduire dans le circuit d'alimentation des gaz d'échappement refroidis. Ceci présente les inconvénients d'augmenter la consommation d'essence et, en sortant des proportions stoechiométriques permettant une combustion complète du mélange air - essence, d'amoindrir l'efficacité du catalyseur du circuit d'échappement qui fonctionne de manière optimale lorsque les proportions stoechiométriques sont respectées. Il en résulte une augmentation de la pollution.

### OBJET DE L'INVENTION

Un but de l'invention est de proposer un procédé pour limiter l'apparition de cliquetis dans les moteurs à essence.

### RESUME DE L'INVENTION

A cet effet, on prévoit, selon l'invention, un moteur thermique à essence comprenant un bloc moteur délimitant une chambre de combustion reliée à un circuit d'admission comportant un compresseur et un circuit d'échappement comportant une turbine d'entraînement du compresseur, le moteur comportant un refroidisseur relié au circuit d'admission et un circuit de recirculation de gaz d'échappement qui est raccordé au circuit d'échappement en aval de la turbine et est raccordé au circuit d'admission en amont du compresseur.

Le circuit de recirculation de gaz d'échappement permet d'introduire, dans le circuit d'alimentation, des gaz d'échappement refroidis dont on s'est aperçu qu'ils permettaient de retarder l'apparition de cliquetis. En effet, les gaz d'échappement refroidis ainsi réintroduits ne jouent aucun rôle dans la combustion mais revêtent une fonction de piège à chaleur permettant notamment de limiter l'apparition de zones d'auto-inflammation dans le mélange contenu dans la chambre de combustion. Ainsi, l'introduction dans la chambre de combustion de gaz d'échappement permet d'augmenter la résistance au cliquetis et donc d'augmenter l'avance à l'allumage. Il en résulte une augmentation du couple moteur pour une même richesse en carburant par rapport à un moteur essence classique, ou de ramener le mélange à des proportions stoechiométriques et de diminuer la consommation de carburant pour des performances identiques à celles des moteurs à essence classiques. En outre, ceci permet également d'abaisser la température des gaz d'échappement et de limiter l'impact de ceux-ci sur les composants du circuit d'échappement comme la turbine et le catalyseur. A faible charge, l'introduction dans la chambre de combustion de gaz d'échappement permet alors de diminuer les émissions d'oxyde d'azote (la réalisation du catalyseur nécessite alors une quantité plus faible de métaux précieux) et de diminuer les pertes de pompage à l'admission (réduisant ainsi la consommation en carburant). Le prélèvement des gaz en aval de la turbine apparaît particulièrement efficace pour obtenir les effets souhaités.

Selon l'invention, le refroidisseur est disposé entre le compresseur et le bloc moteur et le refroidisseur est un refroidisseur à eau.

Un refroidisseur à eau (également appelé échangeur thermique air - eau) est particulièrement efficace et permet avec un encombrement relativement faible de refroidir suffisamment le mélange air gaz recirculés qui sort du compresseur avec une température élevée de l'ordre de 180°C. Cet encombrement limité du refroidisseur à eau permet en outre de rapprocher le point d'injection des gaz recirculés du bloc moteur. Ceci permet d'améliorer la réponse du moteur aux variations de régime.

L'invention a pour objet un procédé de gestion d'un tel moteur, comprenant l'étape, lorsque le moteur a un paramètre de fonctionnement atteignant un seuil limite d'apparition de cliquetis, d'agir sur une quantité de gaz issus du circuit de recirculation introduite dans le circuit d'alimentation. Ceci permet de rendre la charge d'air moins sensible aux cliquetis.

L'avance à l'allumage permet d'avoir une meilleure combustion produisant un couple plus important compensant en partie la baisse de couple engendrée par l'introduction des gaz d'échappement refroidis. Selon l'invention, l'avance à l'allumage est maintenue à une valeur au moins égale à son niveau antérieur et la richesse du mélange est maintenue dans les proportions stoechiométriques.

D'autres caractéristiques et avantages de l'invention ressortiront à la lecture de la description qui suit d'un mode de réalisation particulier non limitatif de l'invention.

### BREVE DESCRIPTION DES DESSINS

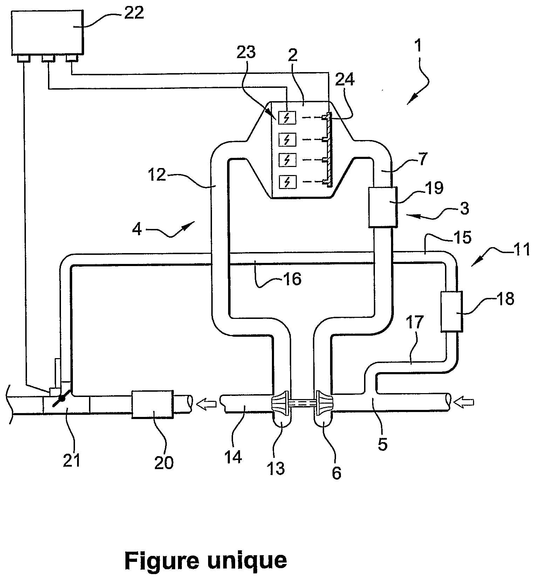

Il sera fait référence à la figure unique annexée représentant schématiquement un moteur thermique conforme à l'invention.

### DESCRIPTION DETAILLEE DE L'INVENTION

En référence à la figure, le moteur thermique conforme à l'invention, généralement désigné en 1, comprend un bloc moteur 2 définissant de façon connue en soi des chambres de combustion pourvues de pistons entraînant en rotation un arbre de sortie du moteur. Les chambres de combustion du bloc moteur 2 sont reliées de façon connue en elle-même à un circuit d'alimentation généralement désigné en 3 et à un circuit d'échappement généralement désigné en 4.

Le circuit d'alimentation 3 comprend une conduite d'admission 5 débouchant dans un compresseur 6 relié à un refroidisseur d'air de suralimentation 19 lui-même relié par une tubulure d'admission 7 aux chambres de combustion du bloc moteur 2. Le compresseur 6 est ici un compresseur centrifuge connu en lui-même comportant un disque à ailettes 8 monté pour pivoter autour d'un axe 9 dans un carter 10. La conduite d'admission 5 débouche dans le carter 10 coaxialement à l'axe de rotation 9.

Le circuit d'échappement 4 est connu en lui-même et comprend une tubulure d'échappement 12 reliant les chambres de combustion du bloc moteur 2 à une turbine 13 d'entraînement en rotation du compresseur 6. La turbine 13 est reliée à une conduite de sortie d'échappement 14 incorporant un catalyseur 20.

Le moteur thermique comprend en outre un circuit de recirculation 11 des gaz d'échappement. Le circuit de recirculation 11 des gaz d'échappement possède un conduit 15 ayant une extrémité 16 reliée par une vanne 21 à la tubulure d'échappement 12 en aval du catalyseur 20 et donc de la turbine 13 et une portion d'extrémité 17 reliée à la conduite d'admission 5 en amont du compresseur 6. Entre ces deux extrémités, le conduit 16 incorpore un échangeur thermique 18.

Le refroidisseur d'air de suralimentation 19 est ici un échangeur à eau dont l'eau est régulée à une température de l'ordre de 50 à 55°C pour obtenir un mélange admis dans le cylindre à une température inférieure à 60°C environ. Les gaz d'échappement réinjectés dans le circuit d'admission ne permettent pas la combustion en eux-mêmes mais servent de piège à chaleur pour diminuer la température du mélange dans la chambre de combustion.

La vanne 21 est une vanne trois voies (une voie d'entrée reliée à la sortie du catalyseur, une première voie de sortie reliée à l'entrée du circuit de recirculation 11 et une deuxième voie de sortie reliée à la sortie du circuit d'échappement 4) qui comprend un papillon mobile entre une première position extrême dans laquelle le papillon dirige le fluide principalement vers le circuit de recirculation 11 et une deuxième position extrême dans laquelle le papillon dirige le flux principalement vers la sortie du circuit d'échappement 4. Dans sa première position extrême, le papillon a une partie s'étendant en regard de la deuxième voie de sortie pour créer dans celle-ci une perte de charge qui favorise le passage des gaz d'échappement dans le circuit de recirculation 11. Il n'est dès lors pas nécessaire de disposer en aval de la vanne 21 un volet dédié pour engendrer cette perte de charge.

Le moteur comprend une unité de contrôle 22 (ECU, *Engine Control Unit*) reliée à un dispositif d'allumage généralement désigné en 23 (ici des bougies disposées dans chaque chambre de combustion), à un dispositif de distribution de carburant généralement désigné en 24 (ici une rampe d'injection avec des injecteurs disposés dans chaque chambre de combustion et reliés à un circuit de carburant), et à la vanne 21.

L'unité de contrôle 22 pilote de façon connue en soi le dispositif de distribution de carburant 24 pour déterminer la proportion de carburant injectée dans la chambre de combustion par rapport à la quantité d'air admise (richesse du mélange). L'unité de contrôle 22 pilote de façon connue en soi le dispositif d'allumage 23 pour avancer ou retarder l'allumage par rapport au point mort haut du cycle du piston de chaque chambre de combustion. L'unité de contrôle 22 pilote également la vanne 21 pour réguler le débit de gaz d'échappement passant dans le circuit de recirculation 11. Le pilotage de ces différents composants est réalisé en fonction de paramètres détectés dans le moteur, comme le régime de celui-ci, la température, la demande d'accélération,...

Il est connu d'utiliser la valeur de certains de ces paramètres pour déterminer le risque d'apparition de cliquetis. On sait notamment que le risque de cliquetis est plus important à pleine charge. Il est en outre possible d'utiliser un détecteur de cliquetis.

Conformément à l'invention, lorsque l'un au moins de ces paramètres atteint un seuil limite d'apparition de cliquetis (notamment lorsque le régime du moteur et/ou une demande d'accélération sont supérieurs à des seuils prédéterminés), le procédé de gestion du moteur mis en œuvre par l'unité de contrôle 22 comprend l'étape d'agir en combinaison sur :
- la quantité de gaz issue du circuit de recirculation 11 introduite dans le circuit d'alimentation 3 (commande de la vanne 21),
- une quantité d'essence introduite dans la chambre de combustion (commande du dispositif de distribution 24), et
- une avance d'allumage (commande du dispositif d'allumage 23),
de manière à retarder voire empêcher l'apparition de cliquetis.

Lorsque le seuil d'apparition de cliquetis est atteint, l'unité de contrôle 22 commande l'admission d'une plus grande quantité de gaz d'échappement et l'étape de maintenir l'avance à l'allumage à une valeur au moins égale à sa valeur actuelle ou augmenter l'avance à l'allumage (en fonction des performances souhaitées) tout en maintenant la richesse du mélange dans les proportions stoechiométriques.

A faible charge, l'unité de commande 22 est également programmée pour injecter des gaz d'échappement dans le circuit d'alimentation 3. L'introduction dans la chambre de combustion de gaz d'échappement permet alors de diminuer les émissions d'oxyde d'azote (la réalisation du catalyseur nécessite alors une quantité plus faible de métaux précieux) et de diminuer les pertes de pompage à l'admission (réduisant ainsi la consommation en carburant).

Bien entendu, l'invention n'est pas limitée au mode de réalisation décrit et on peut y apporter des variantes de réalisation sans sortir du cadre de l'invention tel que défini par les revendications.

En particulier, le moteur peut avoir une structure différente de celle décrite. La vanne trois voies peut ainsi être remplacée par une vanne EGR disposée près du compresseur pour réguler le débit des gaz d'échappement introduit dans le circuit d'alimentation et un papillon disposé dans la ligne d'échappement en aval de la jonction au circuit de recirculation pour engendrer en aval du circuit de recirculation une contre-pression favorisant le passage des gaz d'échappement dans le circuit de recirculation.

Selon une variante moins performante, le refroidisseur 18 peut être omis et le refroidisseur 19 d'air de suralimentation dimensionné pour assurer un refroidissement suffisant.

## Revendications

1. Procédé de gestion d'un moteur thermique à essence, ledit moteur comprenant un bloc moteur (2) relié à un circuit d'admission (3) comportant un compresseur (6) et un circuit d'échappement (4) comportant une turbine (13) d'entraînement du compresseur, ledit moteur comportant en outre un refroidisseur (19) à eau relié au circuit d'admission et disposé entre le compresseur (6) et le bloc moteur (2), et un circuit de recirculation de gaz d'échappement (11), le procédé comportant l'étape, lorsque le moteur présente un paramètre de fonctionnement atteignant un seuil limite d'apparition de cliquetis, d'agir sur une quantité de gaz issus du circuit de recirculation introduite dans le circuit d'alimentation, le circuit de recirculation (11) étant raccordé au circuit d'échappement (4) en aval de la turbine (13) et au circuit d'admission en amont du compresseur (6), par l'intermédiaire d'une vanne (21) comportant un organe de commande relié à une unité de contrôle moteur (22) pour réguler un débit de gaz dans le circuit de recirculation, **caractérisé en ce que**, lorsque le seuil d'apparition de cliquetis est atteint, l'unité de contrôle 22 commande l'admission d'une plus grande quantité de gaz d'échappement dans le circuit de recirculation et le procédé comporte l'étape de maintenir l'avance à l'allumage à une valeur au moins égale à sa valeur actuelle tout en maintenant la richesse du mélange dans les proportions stoechiométriques.

2. Procédé selon la revendication 1, dans lequel le procédé comprenant en outre l'étape d'agir également sur une quantité d'essence introduite dans la chambre de combustion.

3. Procédé selon la revendication 1 ou la revendication 2, dans lequel le circuit de recirculation (11) comprend un refroidisseur (18) .

4. Procédé selon la revendication 3, dans lequel le circuit d'échappement (4) comprend un catalyseur (20) en aval de la turbine (13) et le circuit de recirculation (11) est relié au circuit d'échappement en aval du catalyseur.

## Patentansprüche

1. Verfahren zur Steuerung eines Benzin-Verbrennungsmotors, wobei der Motor einen Motorblock (2) umfasst, der mit einem Ansaugtrakt (3), welcher einen Verdichter (6) umfasst, und einem Abgastrakt (4) verbunden ist, welcher eine Turbine (13) zum Antreiben des Verdichters umfasst, wobei der Motor weiter einen Wasserkühler (19), der mit dem Ansaugtrakt verbunden und zwischen dem Verdichter (6) und dem Motorblock (2) angeordnet ist, und einen Abgasrückführtrakt (11) umfasst, wobei das Verfahren den Schritt umfasst, wenn der Motor einen Betriebsparameter aufweist, der eine Grenzschwelle des Auftretens von Klopfen erreicht, des Einwirkens auf eine aus dem Rückführtrakt stammende Gasmenge, die in den Ansaugtrakt eingeführt wird, wobei der Rückführtrakt (11) mit Hilfe eines Ventils (21), das ein Steuerorgan umfasst, welches mit einer Motorsteuereinheit (22) verbunden ist, stromabwärts der Turbine (13) an den Abgastrakt (4) und stromaufwärts des Verdichters (6) an den Ansaugtrakt angeschlossen ist, um einen Gasdurchsatz im Rückführtrakt zu regeln, **dadurch gekennzeichnet, dass** wenn die Schwelle des Auftretens von Klopfen erreicht wird, die Steuereinheit 22 die Ansaugung einer größeren Menge Abgas in den Rückführtrakt steuert, und das Verfahren den Schritt umfasst des Haltens des Zündzeitpunkts auf einem Wert, der mindestens gleich seinem aktuellen Wert ist, während gleichzeitig das Mischungsverhältnis in den stöchiometrischen Proportionen gehalten wird.

2. Verfahren nach Anspruch 1, wobei das Verfahren weiter den Schritt umfasst des Einwirkens ebenfalls auf eine Benzinmenge, die in die Brennkammer eingeführt wird.

3. Verfahren nach Anspruch 1 oder Anspruch 2, wobei der Rückführtrakt (11) einen Kühler (18) umfasst.

4. Verfahren nach Anspruch 3, wobei der Abgastrakt (4) stromabwärts der Turbine (13) einen Katalysator (20) umfasst, und der Rückführtrakt (11) stromabwärts des Katalysators mit dem Abgastrakt verbunden ist.

## Claims

1. Method for managing a petrol internal combustion engine, said engine comprising an engine block (2) connected to an intake circuit (3) comprising a compressor (6) and an exhaust circuit (4) comprising a turbine (13) which drives the compressor, said engine further comprising a water cooler (19) connected to the intake circuit and arranged between the compressor (6) and the engine block (2), and an exhaust gas recirculation circuit (11), the method comprising, when the engine has an operating parameter that reaches a threshold limit at which pinking occurs, a step of modifying a quantity of gas originating from the recirculation circuit injected into the supply circuit, the recirculation circuit (11) being connected to the exhaust circuit (4) downstream of the turbine (13) and to the intake circuit upstream of the compressor (6), via a valve (21) comprising a control member connected to an engine control unit (22) in order to control a gas flow rate in the recirculation circuit, **characterised in that**, when the threshold at which pinking occurs is reached, the control unit 22 activates the intake of a larger quantity of exhaust gas in the recirculation circuit and the method comprises the step of maintaining the spark advance at a value that is at least equal to the current value thereof while keeping the mixture composition at stoichiometric proportions.

2. Method according to claim 1, wherein the method further comprises the step of additionally modifying a quantity of petrol injected into the combustion chamber.

3. Method according to claim 1 or claim 2, wherein the recirculation circuit (11) comprises a cooler (18).

4. Method according to claim 3, wherein the exhaust circuit (4) comprises a catalyst (20) downstream of the turbine (13) and the recirculation circuit (11) is connected to the exhaust circuit downstream of the catalyst.
